# EUROPÄISCHE PATENTSCHRIFT

(11) **EP 3 023 181 B1**
(45) Veröffentlichungstag und Bekanntmachung des Hinweises auf die Patenterteilung: **06.09.2023**
(21) Anmeldenummer: 15195931.9
(22) Anmeldetag: 23.11.2015
(51) Int. Cl.: B23B 29/24, B23Q 39/02, B27C 9/04

(54) **BEARBEITUNGSAGGREGAT UND BEARBEITUNGSANLAGE ZU DESSEN AUFNAHME**
MACHINING UNIT, AND MACHINING SYSTEM FOR HOLDING THE SAME
AGREGAT DE TRAITEMENT ET INSTALLATION DE TRAITEMENT POUR SA RECEPTION

(30) Priorität: 24.11.2014 DE 102014223908
(43) Veröffentlichungstag der Anmeldung: 25.05.2016
(73) Patentinhaber: HOMAG GmbH, 72296 Schopfloch (DE)
(72) Erfinder: Schmieder, Volker, 72116 Mössingen (DE); Calmbach, Martin, 72296 Schopfloch (DE)
(74) Vertreter: Grauel, Andreas

(56) Entgegenhaltungen:
- WO-A1-03/101687
- DE-A1- 10 213 778
- DE-A1- 19 528 404
- DE-A1- 19 816 182
- DE-A1-102006 026 186
- KR-A- 20090 109 631
- US-A- 3 955 257
- US-A- 5 885 199
- US-A1- 2006 104 728
- US-A1- 2008 170 921
- US-A1- 2011 137 452
- US-E- R E29 694

## Beschreibung

### Technisches Gebiet

Die Erfindung betrifft ein Bearbeitungsaggregat für Werkstücke, insbesondere aus Holz, Kunststoff oder dergleichen, und eine Bearbeitungsanlage zu einer Aufnahme eines solchen Bearbeitungsaggregats.

### Stand der Technik

Bearbeitungsanlagen für Werkstücke, insbesondere aus Holz, Kunststoff oder dergleichen, sind aus dem Stand der Technik vielfältig bekannt. Bei der Bearbeitung von Werkstücken, wie insbesondere von Fenster- oder Türelementen, vorzugsweise aus Holz, Kunststoff oder dergleichen, dienen solche Bearbeitungsanlagen üblicherweise dazu, eine Vielzahl an spanenden Bearbeitungen, insbesondere Bohr- und Fräsarbeiten, durchzuführen.

Aus dem Stand der Technik sind Bearbeitungsanlagen bekannt, welche eine Werkstückaufnahme aufweisen, die zu einer Befestigung eines Werkstücks dient. Weiterhin bekannt ist, dass solche Bearbeitungsanlagen zudem ein Bearbeitungsaggregat aufnehmen können, welches zur Aufnahme eines Werkzeugs dient und das Werkzeug das Werkstück spanend bearbeiten kann. Für die Durchführung von verschiedenen spanenden Bearbeitungen ist es erforderlich, das hierfür benötigte Werkzeug in das Bearbeitungsaggregat einzusetzen und davor das nicht mehr benötigte Werkzeug aus dem Bearbeitungsaggregat herauszunehmen, was zu unerwünschten Nebenzeiten führt.

Das Dokument DE 195 28 404 A offenbart ein Bearbeitungsaggregat mit einem Körper, mit einem mit dem Körper verbundenen Aufnahmeelement, welches zu einer Aufnahme des Bearbeitungsaggregats in einer Bearbeitungsanlage dient, mit einer ersten Werkzeugaufnahme, welche zu einem Aufnehmen eines Werkzeugs dient, das zu einer Bearbeitung eines Werkstücks dient, mit einer zweiten Werkzeugaufnahme, welche zu einem Aufnehmen eines Werkzeugs dient, das zu einer Bearbeitung eines Werkstücks dient, mit einer Längsrichtung des Körper des Bearbeitungsaggregats, und mit zumindest zwei Ebenen, welche senkrecht zu der Längsrichtung des Körpers des Bearbeitungsaggregats angeordnet sind, wobei die erste Werkzeugaufnahme in der ersten Ebene angeordnet ist und die zweite Werkzeugaufnahme in der zweiten Ebene angeordnet ist und die zwei Ebenen in Längsrichtung voneinander beabstandet sind, wobei der Körper eine Umfangsrichtung aufweist.

Zudem ist bekannt, dass die Bearbeitungsaggregate eine Mehrzahl an Werkzeugen aufnehmen können und die Werkzeuge am Umfang des Bearbeitungsaggregats angeordnet sind, welche senkrecht zu einer Rotationssymmetrieachse des Bearbeitungsaggregats ist. Allerdings können die einzelnen Werkzeuge bei ungünstiger Anordnung sich gegenseitig bei einer Bearbeitung behindern oder eine Bearbeitung verhindern.

### Darstellung der Erfindung, Aufgabe, Lösung, Vorteile

Der Erfindung liegt die Aufgabe zugrunde, ein Bearbeitungsaggregat so auszubilden, dass eine Bearbeitungsanlage das Bearbeitungsaggregat aufnehmen kann und unerwünschte Nebenzeiten bei der Bearbeitung eines Werkstücks reduziert werden und eine effektive und günstige Bearbeitung eines Werkstücks ermöglicht wird.

Diese Aufgabe wird mit den Merkmalen von Anspruch 1 gelöst.

Ein Ausführungsbeispiel der Erfindung betrifft ein Bearbeitungsaggregat mit einem Körper, mit einem mit dem Körper verbundenen Aufnahmeelement, welches zu einer Aufnahme des Bearbeitungsaggregats in einer Bearbeitungsanlage dient, mit einer ersten Werkzeugaufnahme, welche zu einem Aufnehmen eines Werkzeugs dient, das zu einer Bearbeitung eines Werkstücks dient, mit einer zweiten Werkzeugaufnahme, welche zu einem Aufnehmen eines Werkzeugs dient, das zu einer Bearbeitung eines Werkstücks dient, mit einer Längsrichtung des Körpers des Bearbeitungsaggregats, mit zumindest zwei Ebenen, welche senkrecht zu der Längsrichtung des Körpers des Bearbeitungsaggregats angeordnet sind, wobei die erste Werkzeugaufnahme in der ersten Ebene angeordnet ist und die zweite Werkzeugaufnahme in der zweiten Ebene angeordnet ist und die zwei Ebenen in Längsrichtung voneinander beabstandet sind. Dies hat den Vorteil, dass die durch das Wechseln von Werkzeugen des Bearbeitungsaggregats entstehenden Nebenzeiten mit dem erfindungsgemäßen Bearbeitungsaggregat reduziert werden, da die erste Werkzeugaufnahme und die zweite Werkzeugaufnahme jeweils ein Werkzeug aufnehmen können und durch die Beabstandung der zwei Ebenen voneinander, in denen die erste und die zweite Werkzeugaufnahme angeordnet sind, ist eine günstige Bearbeitung möglich ohne eine gegenseitige Behinderung.

Der Körper weist eine Umfangsrichtung auf und die erste Werkzeugaufnahme ist in der Umfangsrichtung des Körpers um 90° versetzt, zu der zweiten Werkzeugaufnahme angeordnet ist. Dadurch ist das Werkstück von dem in der ersten Werkzeugaufnahme aufgenommenen Werkzeug bearbeitbar, ohne, dass das in der zweiten Werkzeugaufnahme aufgenommene Werkzeug oder die zweite Werkzeugaufnahme die Bearbeitung behindert oder gar verhindert oder umgekehrt, dass das in der ersten Werkzeugaufnahme aufgenommene Werkzeug oder die erste Werkzeugaufnahme die Bearbeitung des Werkstücks durch das in der zweiten Werkzeugaufnahme aufgenommene Werkzeug behindert oder verhindert.

Dabei ist es auch zweckmäßig, wenn das Bearbeitungsaggregat eine Mehrzahl an Werkzeugaufnahmen aufweist und jede Werkzeugaufnahme zur Aufnahme eines Werkzeugs dient. So ist es möglich, dass die Nebenzeiten durch Werkzeugwechsel weiter reduziert werden können und dass das Bearbeitungsaggregat zur gleichen Zeit eine Mehrzahl an verschiedenen Werkzeugen, wie insbesondere einen Bohrer oder einen Fräser, aufweisen kann und somit verschiedene Bearbeitungsformen, wie insbesondere Bohren oder Fräsen, mit einem Bearbeitungsaggregat durchgeführt werden können, ohne einen Werkzeugwechsel durchzuführen.

Weiterhin ist es zweckmäßig, wenn eine Mehrzahl an Werkzeugen des Bearbeitungsaggregats ein Werkstück zur selben Zeit oder zeitlich nacheinander bearbeiten kann. Dadurch ist die für die Bearbeitung eines Werkstücks benötigte Zeit reduzierbar, da verschiedene Bearbeitungsschritte zeitgleich erfolgen können oder die für einen Werkzeugwechsel benötigte Zeit reduziert wird, da das Bearbeitungsaggregat eine Mehrzahl an Werkzeugen aufnehmen kann.

Erfindungsgemäß weist das Bearbeitungsaggregat einen Antrieb auf und ist der Antrieb in dem Körper oder an dem Körper des Bearbeitungsaggregats angeordnet. Der Antrieb dient dazu, die für die Bearbeitung des Werkstücks mit dem in einer Werkzeugaufnahme aufgenommenen Werkzeug notwendige Energie zu liefern. Erfindungsgemäß ist der Antrieb einer Mehrzahl an Werkzeugaufnahmen zugeordnet und treibt so ein Werkzeug oder eine Mehrzahl an Werkzeugen an.

Die Aufgabe zur Bearbeitungsanlage wird mit den Merkmalen von Anspruch gelöst.

Ein Ausführungsbeispiel der Erfindung betrifft eine Bearbeitungsanlage für ein Werkstück, mit einer Werkstückaufnahme, wobei das Werkstück in die Werkstückaufnahme der Bearbeitungsanlage einlegbar oder einfahrbar ist und die Werkstückaufnahme zu einem Befestigen des Werkstücks in der Bearbeitungsanlage dient, wobei die Bearbeitungsanlage eine Aggregatsaufnahme aufweist, welche zu einer Aufnahme des Aufnahmeelements des Bearbeitunqsaqqreqats dient, wobei ein Bearbeitungsaggregat nach einem der vorhergehenden Ansprüche mit seinem Aufnahmeelement in der Aufnahme aufgenommen ist. Dies hat den Vorteil, dass die Bearbeitungsanlage ein Werkstück so bearbeiten kann, dass unerwünschte Nebenzeiten reduziert werden und eine günstige Bearbeitung ohne ein gegenseitiges Hindern der Werkzeuge möglich ist.

Von Vorteil ist dabei weiterhin, wenn die Werkstückaufnahme relativ zu der Aggregatsaufnahme bewegbar ist und/oder die Aggregatsaufnahme relativ zu der Werkstückaufnahme bewegbar ist. Dadurch ist eine günstige Bearbeitung möglich, da das Werkzeug und/oder das Werkstück in einer vorteilhaften Position für die Bearbeitung angeordnet werden können und zudem das Werkstück und das Werkzeug relativ zueinander günstig positioniert werden können.

Es ist auch zweckmäßig, wenn die Bearbeitungsanlage eine Mehrzahl an Aggregatsaufnahmen aufweist. Somit kann die Bearbeitungsanlage eine Mehrzahl an, insbesondere verschiedenen, Bearbeitungsaggregaten aufnehmen, wodurch die Nebenzeiten reduziert werden und eine günstige Bearbeitung eines Werkstücks mit für den jeweiligen Bearbeitungsschritt günstigen Bearbeitungsaggregaten möglich ist.

Vorteilhaft ist gemäß des Erfindungsgedankens, wenn die Bearbeitungsanlage eine Mehrzahl an Werkstückaufnahmen aufweist. Dadurch ist es möglich, eine Mehrzahl an Werkstücken in den Bearbeitungsanlagen zu positionieren und so die für eine Bestückung der Bearbeitungsanlage notwendige Zeit zu verringern.

Weiterhin von Vorteil ist, wenn eine Mehrzahl an Werkstücken zur selben Zeit bearbeitbar ist. Somit erhöht sich die Anzahl der pro Zeiteinheit bearbeitbaren Werkstücke und die Gesamtbearbeitungszeit reduziert sich für die Bearbeitung einer Mehrzahl an Werkstücken.

Es ist auch von Vorteil, wenn zumindest ein Werkstück von einer Mehrzahl an Werkzeugen zur selben Zeit oder zeitlich nacheinander bearbeitbar ist.

Dadurch verringert sich die Bearbeitungszeit für ein Werkstück und Nebenzeiten durch ein Wechseln der Werkzeuge können entfallen, da eine Aggregatsaufnahme eine Mehrzahl an Werkzeugen, insbesondere an verschiedenen Werkzeugen, aufnehmen kann.

Es ist auch bei einem weiteren Ausführungsbeispiel zweckmäßig, wenn die Bearbeitungsanlage zumindest eine Führung aufweist und zumindest eine Aggregatsaufnahme mit der zumindest einen Führung verbunden angeordnet ist. Somit ist eine günstige Anordnung des Bearbeitungsaggregats in der Bearbeitungsanlage für die Bearbeitung eines Werkstücks möglich.

Von Vorteil ist es weiterhin, wenn die zumindest eine Führung relativ zu der Werkstückaufnahme bewegbar ist und/oder die Aggregatsaufnahme relativ zu der zumindest einen Führung bewegbar ist. Dadurch ist es möglich, das in der Aggregatsaufnahme aufgenommene Werkzeug und das in der Werkstückaufnahme angeordnete Werkstück relativ zueinander zu bewegen und so eine günstige Bearbeitung zu ermöglichen.

Es ist auch zweckmäßig, wenn die Bearbeitungsanlage eine Mehrzahl an Führungen aufweist, welche insbesondere parallel angeordnet sind. So kann die Aggregatsaufnahme derart angeordnet werden, dass eine möglichst schnelle Bearbeitung erfolgt.

Weitere vorteilhafte Ausgestaltungen sind durch die nachfolgende Figurenbeschreibung und durch die Unteransprüche beschrieben.

### Kurze Beschreibung der Figuren der Zeichnung

Nachstehend wird die Erfindung auf der Grundlage zumindest eines Ausführungsbeispiels anhand der Figuren der Zeichnung näher erläutert. Es zeigt:

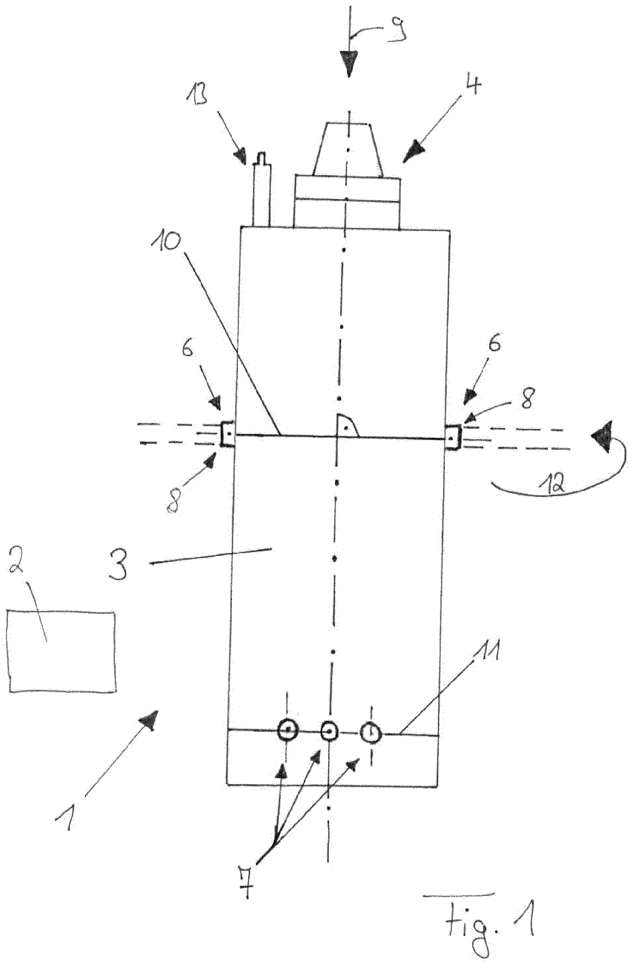

- Fig. 1: eine Schnittansicht eines Ausführungsbeispiels eines erfindungsgemäßen Bearbeitungsaggregats,

### Bevorzugte Ausführung der Erfindung

Die Figur 1 zeigt eine Schnittansicht eines Ausführungsbeispiels eines erfindungsgemäßen Bearbeitungsaggregats 1 für die Bearbeitung eines Werkstücks 2, insbesondere aus Holz, Kunststoff oder dergleichen.

Das Bearbeitungsaggregat 1 weist einen Körper 3 auf. Insbesondere ist es vorteilhaft, dass der Körper 3, wie in Fig. 1 gezeigt, zylinderförmig und/oder rotationssymmetrisch ausgebildet ist. Der Körper kann jedoch auch anderweitig ausgebildet sein.

Der Körper 3 des Bearbeitungsaggregats 1 ist mit einem Aufnahmeelement 4 verbunden, welches zu einer Aufnahme des Bearbeitungsaggregats 1 in eine, in Fig. 1 nicht gezeigte, Bearbeitungsanlage dient. Das Aufnahmeelement 4 ist dabei die Schnittstelle zu einer Bearbeitungsanlage, wie beispielsweise einer Antriebsspindel etc.

Das Bearbeitungsaggregat 1 weist an einer Außenseite des Körpers 3 eine erste Werkzeugaufnahme 6 und eine zweite Werkzeugaufnahme 7 auf, welche jeweils zu einem Aufnehmen eines Werkzeugs 8 dienen. Insbesondere kann das Werkzeug 8 ein Bohrer oder Fräser sein.

Der Körper 3 des Bearbeitungsaggregats 1 weist eine Längsrichtung 9 auf, welche insbesondere bei der in Fig. 1 gezeigten Ausführungsform identisch mit der Symmetrieachse des rotationssymmetrisch ausgebildeten Körpers 3 ist. Dabei kann die Längsachse auch nicht der Symmetrieachse entsprechen.

Die Längsrichtung 9 des Körpers 3 definiert zumindest zwei Ebenen 10, 11, welche senkrecht zu der Längsrichtung 9 angeordnet sind. Fig. 1 zeigt eine erste Ebene 10 und eine zweite Ebene 11, die zudem senkrecht zu der Zeichenebene ausgerichtet sind und daher nur als Gerade dargestellt sind.

Wie Fig. 1 zeigt, ist die erste Werkzeugaufnahme 6 in der ersten Ebene 10 angeordnet und die zweite Werkzeugaufnahme 7 ist in der zweiten Ebene 11 angeordnet. Die erste Ebene 10 und die zweite Ebene 11 sind zweckmäßigerweise in der Längsrichtung 9 des Körpers 3 voneinander beabstandet angeordnet.

Der Körper 3 des Bearbeitungsaggregats 1 weist eine Umfangsrichtung 12 auf, welche Richtungsvektoren aufweist, die tangential an der Umfangsrichtung 12 anliegen, wobei die Umfangsrichtung 12 derart definiert ist, dass alle Richtungsvektoren der Umfangsrichtung 12 in einer gleichen Ebene 10, 11 liegen. Aus Fig. 1 ist zu erkennen, dass die erste Werkzeugaufnahme 6 relativ zu der zweiten Werkzeugaufnahme 7 in der Umfangsrichtung 12 versetzt angeordnet ist. Die erste Werkzeugaufnahme ist 90° versetzt angeordnet.

Weiterhin weist das Bearbeitungsaggregat eine Mehrzahl an Werkzeugaufnahmen 6, 7 auf und jede einzelne Werkzeugaufnahme 6, 7 zur Aufnahme eines Werkzeugs 8 dient. Damit ist es möglich, dass eine Mehrzahl an Werkzeugen 8 ein Werkstück 2 zur selben Zeit bearbeitet. Fig. 1 zeigt drei zweite Werkzeugaufnahmen 7, welche beispielsweise zur Aufnahme von drei Bohrern dienen, um mit einem Bearbeitungsschritt drei benötigte Bohrungen zu ermöglichen, anstatt die drei Bohrungen mit drei Bearbeitungsschritten und nur einem Bohrer zu erreichen.

Weiterhin ist es möglich, dass die Mehrzahl an Werkzeugen 8 ein Werkstück 2 zeitlich nacheinander bearbeiten, insbesondere vorteilhaft ist, dass das in einer der zumindest einen ersten Werkzeugaufnahme 6 angeordnete Werkzeug 8 ein Werkstück 2 vor oder nach dem in einer der zumindest einen zweiten Werkzeugaufnahme 7 angeordneten Werkzeug 8 bearbeitet.

Fig. 1 zeigt beispielsweise zwei erste Werkzeugaufnahmen 6, die an gegenüberliegenden Positionen des Körpers 3 angeordnet sind und jeweils relativ zu der zweiten Werkzeugaufnahme 7 um 90° in Umfangsrichtung 12 versetzt sind. Es ist mit dem gezeigten Ausführungsbeispiel des Bearbeitungsaggregats 1 möglich, dass eine der ersten Werkzeugaufnahmen 6 einen Fräser aufnimmt und die gezeigten drei zweiten Werkzeugaufnahmen 7 jeweils einen Bohrer aufnehmen und zuerst ein benötigtes und drei Bohrungen aufweisendes Bohrbild erzeugt wird und danach Fräsarbeiten durchgeführt werden.

Das Bearbeitungsaggregat 1 weist einen Antrieb 13 auf, welcher in dem Körper des Bearbeitungsaggregates und/oder an dem Körper des Bearbeitungsaggregates angeordnet sein kann.

Statt der genannten Bohrer können auch andere Werkzeuge, wie beispielsweise Fräselemente, Schleifelemente, Schraub- oder Nagelelemente, Dübelsetzelemente und/oder Markierelemente etc. verwendet werden.

### Bezugszeichenliste

- 1: Bearbeitungsaggregat
- 2: Werkstück
- 3: Körper des Bearbeitungsaggregats
- 4: Aufnahmeelement

- 6: erste Werkzeugaufnahme
- 7: zweite Werkzeugaufnahme
- 8: Werkzeug
- 9: Längsrichtung
- 10: erste Ebene
- 11: zweite Ebene
- 12: Umfangsrichtung
- 13: Antrieb

## Patentansprüche

1. Bearbeitungsaggregat (1) mit einem Körper (3), mit einem mit dem Körper (3) verbundenen Aufnahmeelement (4), welches zu einer Aufnahme des Bearbeitungsaggregats (1) in einer Bearbeitungsanlage dient, mit einer ersten Werkzeugaufnahme (6), welche zu einem Aufnehmen eines Werkzeugs (8) dient, das zu einer Bearbeitung eines Werkstücks (2) dient, mit einer zweiten Werkzeugaufnahme (7), welche zu einem Aufnehmen eines Werkzeugs (8) dient, das zu einer Bearbeitung eines Werkstücks (2) dient, mit einer Längsrichtung (9) des Körpers (3) des Bearbeitungsaggregats (1), mit zumindest zwei Ebenen (10,11), welche senkrecht zu der Längsrichtung (9) des Körpers (3) des Bearbeitungsaggregats (1) angeordnet sind, wobei die erste Werkzeugaufnahme (6) in der ersten Ebene (10) angeordnet ist und die zweite Werkzeugaufnahme (7) in der zweiten Ebene (11) angeordnet ist und die zwei Ebenen (10,11) in Längsrichtung (9) voneinander beabstandet sind, wobei der Körper (3) eine Umfangsrichtung (12) aufweist und die erste Werkzeugaufnahme (6) in der Umfangsrichtung (12) des Körpers (3) um 90° versetzt zu der zweiten Werkzeugaufnahme (7) angeordnet ist und wobei das Bearbeitungsaggregat (1) einen Antrieb (13) aufweist und der Antrieb (13) in dem Körper (3) oder an dem Körper (3) des Bearbeitungsaggregats (1) angeordnet ist, wobei der Antrieb (13) die für die Bearbeitung des Werkstücks mit dem in einer Werkzeugaufnahme (6) aufgenommenen Werkzeug notwendige Energie liefert und der Antrieb (13) einer Mehrzahl an Werkzeugaufnahmen (6) zugeordnet ist und eine Mehrzahl an Werkzeugen antreibt.

2. Bearbeitungsaggregat (1) nach Anspruch 1, **dadurch gekennzeichnet, dass** das Bearbeitungsaggregat (1) eine Mehrzahl an Werkzeugaufnahmen (6,7) aufweist und jede Werkzeugaufnahme (6,7) zur Aufnahme eines Werkzeuges (8) dient.

3. Bearbeitungsaggregat (1) nach Anspruch 2, **dadurch gekennzeichnet, dass** eine Mehrzahl an Werkzeugen (8) des Bearbeitungsaggregats (1) ein Werkstück (2) zur selben Zeit oder zeitlich nacheinander bearbeiten kann.

4. Bearbeitungsanlage für ein Werkstück (2), mit einer Werkstückaufnahme, wobei das Werkstück (2) in die Werkstückaufnahme der Bearbeitungsanlage einlegbar oder einfahrbar ist und die Werkstückaufnahme zu einem Befestigen des Werkstücks (2) in der Bearbeitungsanlage dient, **dadurch gekennzeichnet, dass** die Bearbeitungsanlage eine Aggregatsaufnahme aufweist, welche zu einer Aufnahme des Aufnahmeelements (4) eines Bearbeitungsaggregats (1) dient, wobei ein Bearbeitungsaggregat nach einem der vorhergehenden Ansprüche mit seinem Aufnahmeelement in der Aufnahme aufgenommen ist.

5. Bearbeitungsanlage nach Anspruch 4, **dadurch gekennzeichnet, dass** die Werkstückaufnahme relativ zu der Aggregatsaufnahme bewegbar ist und/oder die Aggregatsaufnahme relativ zu der Werkstückaufnahme bewegbar ist.

6. Bearbeitungsanlage nach Anspruch 4 und/oder 5, **dadurch gekennzeichnet, dass** die Bearbeitungsanlage eine Mehrzahl an Aggregatsaufnahmen aufweist.

7. Bearbeitungsanlage nach mindestens einem der Ansprüche 4, 5 oder 6, **dadurch gekennzeichnet, dass** die Bearbeitungsanlage eine Mehrzahl an Werkstückaufnahmen aufweist.

8. Bearbeitungsanlage nach Anspruch 7, **dadurch gekennzeichnet, dass** eine Mehrzahl an Werkstücken (2) zur selben Zeit bearbeitbar ist.

9. Bearbeitungsanlage nach einem der vorhergehenden Ansprüche 4 bis 8, **dadurch gekennzeichnet, dass** zumindest ein Werkstück (2) von einer Mehrzahl an Werkzeugen (8) zur selben Zeit oder zeitlich nacheinander bearbeitbar ist.

10. Bearbeitungsanlage nach zumindest einem der Ansprüche 4 bis 9, **dadurch gekennzeichnet, dass** die Bearbeitungsanlage zumindest eine Führung aufweist und zumindest eine Aggregatsaufnahme mit der zumindest einen Führung verbunden angeordnet ist.

11. Bearbeitungsanlage nach Anspruch 10, **dadurch gekennzeichnet, dass** die zumindest eine Führung relativ zu der Werkstückaufnahme bewegbar ist und/oder die Aggregatsaufnahme relativ zu der zumindest einen Führung bewegbar ist.

12. Bearbeitungsanlage nach einem der Ansprüche 10 oder 11, **dadurch gekennzeichnet, dass** die Bearbeitungsanlage eine Mehrzahl an Führungen aufweist, welche insbesondere parallel angeordnet sind.

13. Bearbeitungsanlage ee nach einem der Ansprüche 4 bis 12, **dadurch gekennzeichnet, dass** die Bearbeitungsanlage einen Werkzeugspeicher aufweist und der Werkzeugspeicher eine Mehrzahl an Werkzeugen (8) aufnehmen kann und der Werkzeugspeicher insbesondere verbunden mit einer der Führungen angeordnet ist.

## Claims

1. A machining aggregate (1) with a body (3), with a receiving element (4) connected to the body (3) which serves to receive the machining aggregate (1) in a machining plant, with a first tool receptacle (6) which serves to receive a tool (8) which serves to machine a workpiece (2), with a second tool receptacle (7) which serves to receive a tool (8) which serves to machine a workpiece (2), with a longitudinal direction (9) of the body (3) of the machining aggregate (1), with at least two planes (10, 11) which are arranged perpendicular to the longitudinal direction (9) of the body (3) of the machining aggregate (1), wherein the first tool receptacle (6) is arranged in the first plane (10) and the second tool receptacle (7) is arranged in the second plane (11) and the two planes (10, 11) are spaced apart from one another in the longitudinal direction (9), wherein the body (3) has a circumferential direction (12) and the first tool receptacle (6) is arranged in the circumferential direction (12) of the body (3) offset at 90° from the second tool receptacle (7) and wherein the machining aggregate (1) has a drive (13) and the drive (13) is arranged in the body (3) or on the body (3) of the machining aggregate (1), wherein the drive (13) provides the energy required for the machining of the workpiece with the tool received in a tool receptacle (6) and the drive (13) is associated with a plurality of tool receptacles (6) and drives a plurality of tools.

2. The machining aggregate (1) according to claim 1, **characterised in that** the machining aggregate (1) has a plurality of tool receptacles (6, 7) and every tool receptacle (6, 7) serves to receive a tool (8).

3. The machining aggregate (1) according to claim 2, **characterised in that** a plurality of tools (8) of the machining aggregate (1) can machine a workpiece (2) simultaneously or sequentially in time.

4. A machining plant for a workpiece (2), with a workpiece receptacle, wherein the workpiece (2) can be inserted or introduced into the workpiece receptacle of the machining plant and the workpiece receptacle serves to fasten the workpiece (2) in the machining plant, **characterised in that** the machining plant has an aggregate receptacle which serves to receive the receiving element (4) of a machining aggregate (1), wherein a receiving element of a machining aggregate according to one of the preceding claims is received in the receptacle.

5. The machining plant according to claim 4, **characterised in that** the workpiece receptacle can be moved relative to the aggregate receptacle and/or the aggregate receptacle can be moved relative to the workpiece receptacle.

6. The machining plant according to claim 4 and/or 5, **characterised in that** the machining plant has a plurality of aggregate receptacles.

7. The machining plant according to at least one of claims 4, 5 or 6, **characterised in that** the machining plant has a plurality of workpiece receptacles.

8. The machining plant according to claim 7, **characterised in that** a plurality of workpieces (2) can be machined at the same time.

9. The machining plant according to any one of the preceding claims 4 to 8, **characterised in that** at least one workpiece (2) can be machined by a plurality of tools (8) at the same time or sequentially in time.

10. The machining plant according to at least one of claims 4 to 9, **characterised in that** the machining plant has at least one guide and at least one aggregate receptacle is arranged connected to the at least one guide.

11. The machining plant according to claim 10, **characterised in that** the at least one guide can be moved relative to the workpiece receptacle and/or the aggregate receptacle can be moved relative to the at least one guide.

12. The machining plant according to any one of claims 10 or 11, **characterised in that** the machining plant has a plurality of guides which are in particular arranged in parallel.

13. The machining plant according to any one of claims 4 to 12, **characterised in that** the machining plant has a tool storage and the tool storage can receive a plurality of tools (8) and the tool storage is in particular arranged connected to one of the guides.

## Revendications

1. Ensemble d'usinage (1) comprenant un corps (3), comprenant un élément de logement (4) relié au corps (3), lequel élément de logement sert à une réception de l'ensemble d'usinage (1) dans un dispositif d'usinage, comprenant un premier logement d'outil (6) qui sert à un logement d'un outil (8) qui sert à un usinage d'une pièce à usiner (2), comprenant un deuxième logement d'outil (7) qui sert à un logement d'un outil (8) qui sert à un usinage d'une pièce à usiner (2), comprenant une direction longitudinale (9) du corps (3) de l'ensemble d'usinage (1), comprenant au moins deux plans (10, 11) qui sont disposés de façon perpendiculaire à la direction longitudinale (9) du corps (3) de l'ensemble d'usinage (1), où le premier logement d'outil (6) est disposé dans le premier plan (10) et le deuxième logement d'outil (7) est disposé dans le deuxième plan (11), et les deux plans (10, 11) sont espacés l'un de l'autre dans la direction longitudinale (9), où le corps (3) présente une direction circonférentielle (12), et le premier logement d'outil (6) est disposé, dans la direction circonférentielle (12) du corps (3), en étant décalé de 90° par rapport au deuxième logement d'outil (7), et où l'ensemble d'usinage (1) présente un entraînement (13), et l'entraînement (13) est disposé dans le corps (3) ou sur le corps (3) de l'ensemble d'usinage (1), où l'entraînement (13) fournit l'énergie nécessaire pour l'usinage de la pièce à usiner avec l'outil logé dans un logement d'outil (6), et l'entraînement (13) est associé à une pluralité de logements d'outils (6) et entraîne une pluralité d'outils.

2. Ensemble d'usinage (1) selon la revendication 1, **caractérisé en ce que** l'ensemble d'usinage (1) présente une pluralité de logements d'outils (6, 7), et chaque logement d'outil (6, 7) sert au logement d'un outil (8).

3. Ensemble d'usinage (1) selon la revendication 2, **caractérisé en ce qu'**une pluralité d'outils (8) de l'ensemble d'usinage (1) peut, en même temps ou successivement dans le temps, traiter une pièce à usiner (2).

4. Dispositif d'usinage pour une pièce à usiner (2), ledit dispositif comprenant un logement de la pièce à usiner, où la pièce à usiner (2) peut être insérée ou rentrée dans le logement de la pièce à usiner du dispositif d'usinage, et le logement de la pièce à usiner sert à une fixation, dans le dispositif d'usinage, de la pièce à usiner (2), **caractérisé en ce que** le dispositif d'usinage présente un logement de l'ensemble, logement qui sert à la réception de l'élément de logement (4) d'un ensemble d'usinage (1), où un ensemble d'usinage selon l'une quelconque des revendications précédentes est reçu, avec son élément de logement, dans le logement.

5. Dispositif d'usinage selon la revendication 4, **caractérisé en ce que** le logement de la pièce à usiner peut être déplacé par rapport au logement de l'ensemble et/ou le logement de l'ensemble peut être déplacé par rapport au logement de la pièce à usiner.

6. Dispositif d'usinage selon la revendication 4 et/ou 5, **caractérisé en ce que** le dispositif d'usinage présente une pluralité de logements d'ensembles.

7. Dispositif d'usinage selon au moins l'une quelconque des revendications 4, 5 ou 6, **caractérisé en ce que** le dispositif d'usinage présente une pluralité de logements de pièces à usiner.

8. Dispositif d'usinage selon la revendication 7, **caractérisé en ce qu'**une pluralité de pièces à usiner (2) peut être traitée en même temps.

9. Dispositif d'usinage selon l'une quelconque des revendications 4 à 8, **caractérisé en ce qu'**au moins une pièce à usiner (2) peut être traitée en même temps ou successivement dans le temps par une pluralité d'outils (8).

10. Dispositif d'usinage selon au moins l'une quelconque des revendications 4 à 9, **caractérisé en ce que** le dispositif d'usinage présente au moins un guidage et au moins un logement de l'ensemble est disposé en étant relié à l'au moins un guidage.

11. Dispositif d'usinage selon la revendication 10, **caractérisé en ce que** l'au moins un guidage peut être déplacé par rapport au logement de la pièce à usiner et/ou le logement de l'ensemble peut être déplacé par rapport à l'au moins un guidage.

12. Dispositif d'usinage selon l'une des revendications 10 ou 11, **caractérisé en ce que** le dispositif d'usinage présente une pluralité de guidages qui sont disposés en particulier de façon parallèle.

13. Dispositif d'usinage selon l'une quelconque des revendications 4 à 12, **caractérisé en ce que** le dispositif d'usinage présente un magasin d'outils et le magasin d'outils peut recevoir une pluralité d'outils (8), et le magasin d'outils est disposé en étant relié en particulier à l'un des guidages.
